# EUROPÄISCHE PATENTSCHRIFT

(11) **EP 3 614 175 B1**
(45) Veröffentlichungstag und Bekanntmachung des Hinweises auf die Patenterteilung: **22.06.2022**
(21) Anmeldenummer: 18190429.3
(22) Anmeldetag: 23.08.2018
(51) Int. Cl.: G01S 17/93, G01S 7/484, G01S 7/486, G01S 7/487, G01S 17/10

(54) **VERFAHREN UND VORRICHTUNG ZUR OPTISCHEN DISTANZMESSUNG**
METHOD AND DEVICE FOR OPTICALLY MEASURING DISTANCES
PROCÉDÉ ET DISPOSITIF DE MESURE DE DISTANCE OPTIQUE

(43) Veröffentlichungstag der Anmeldung: 26.02.2020
(73) Patentinhaber: Ibeo Automotive Systems GmbH, 22143 Hamburg (DE)
(72) Erfinder: Kiehn, Michael, 22143 Hamburg (DE); Birnbacher, Wolfgang, 22143 Hamburg (DE)
(74) Vertreter: RGTH

(56) Entgegenhaltungen:
- EP-A2- 2 157 445
- US-A1- 2018 188 358
- US-A1- 2018 188 368

## Beschreibung

### Technisches Gebiet

Die Erfindung betrifft ein Verfahren sowie eine Vorrichtung zur optischen Distanzmessung.

### Stand der Technik

Optische Distanzmessungen, insbesondere zur Anwendung in der fahrerlosen Navigation von Fahrzeugen, sind aus dem Stand der Technik bekannt. Sie beruhen auf dem Time-of-Flight-Prinzip, wobei zur Messung ein scannender Sensor, insbesondere ein LIDAR (Abkürzung für "light detection and ranging") Sensor eingesetzt wird, der periodisch Messpulse aussendet, die an Objekten reflektiert werden, wobei die reflektierten Messpulse detektiert werden. Aus der Bestimmung der Laufzeit der Messpulse von dem Sensor zu den Objekten und zurück kann mithilfe der Lichtgeschwindigkeit auf die Distanz zu diesen Objekten geschlossen werden.

Für die maximale Messreichweite eines nach dem Time Correlated Single Photon Counting (TCSPC) Verfahren arbeitenden Time-of-Flight-Messgerätes ist die abgegebene Energie ein wesentlicher Parameter. Dabei ist es im Prinzip unerheblich, in welcher Zeitspanne die Energie abgegeben wird. Ziel für die Anwendung ist eine möglichst große Messreichweiten zu erreichen.

Da die technisch realisierbaren Pulsleistungen begrenzt sind und die Messgenauigkeit mit Verbreiterung der emittierten Messpulse abnimmt, bietet es sich an, die zur Erreichung einer Messreichweite erforderliche Energie auf mehrere Messpulse zu verteilen. Dadurch können allerdings Aliasing-Effekte auftreten. Dies bedeutet, dass die Reflektion eines Messpulses nicht eindeutig einem ausgesandten Messpuls zugeordnet werden kann. Als Resultat entstehen falsche Objektpositionen, die nach dem Stand der Technik nicht von der tatsächlichen Objektposition unterschieden werden können.

Um diese Aliasing-Effekte zu vermeiden, können die Sendepulse im Stand der Technik nicht beliebig schnell hintereinander ausgesandt werden, da ansonsten keine klare Zuordnung der Reflektion möglich ist. Gleichzeitig kann die Laufzeit des Messpulses, das heißt die Zeit, die ein Messpuls braucht, bis er wieder den Sensor erreicht, nicht beschleunigt werden. Um also einen großen Distanzbereich abzutasten, muss nach dem Emittieren eines Messpulses die doppelte Laufzeit bis zum weitest entferntesten, möglichen Objekt gewartet werden, bis erneut ein Messpuls abgegeben werden kann.

Wird nunmehr die Energie auf mehrere Pulse verteilt und diese sehr nah aneinander ausgesandt, kann die tatsächliche Laufzeit dieser Sequenz an Messpulsen, insbesondere durch Auftreten mehrerer Nebenmaxima, beim Auswerten der empfangenen Signale, nicht eindeutig ermittelt werden. Dadurch beschränkt das Verteilen der erforderlichen Energie auf mehrere Messpulse im Stand der Technik die maximale Messreichweite.

US 2018/0188368 A1 offenbart ein System zur Erkennung von Objekten für Fahrerassistenzgeräte in Kraftfahrzeugen, das einen Sender zum Übertragen eines optischen Signals umfasst.

EP 2 157 445 A2 betrifft ein Lidarsystem, das pseudozufällige Pulssequenzen verwendet.

### Darstellung der Erfindung: Aufgabe, Lösung, Vorteile

Der vorliegenden Erfindung liegt die Aufgabe zugrunde, ein Verfahren sowie eine Vorrichtung zur Distanzmessung derart zu verbessern, dass Messpulse in Form einer Sequenz ausgesandt werden können, wobei jedoch keine Aliasing-Effekte auftreten oder diese minimiert werden und somit die Laufzeit der Sequenz eindeutig bestimmt werden kann. Gleichzeitig soll die ausgesandte Energie maximiert werden.

Gelöst wird die oben genannte Aufgabe durch ein Verfahren zur optischen Distanzmessung, das das Aussenden einer Vielzahl von Messpulsen, die Reflektion von ausgesandten Messpulsen an mindestens einem Objekt und das Empfangen von reflektierten Messpulsen umfasst. Es wird eine Sequenz von Messpulsen ausgesandt, wobei die Sequenz zeitliche Pulsabstände zwischen zeitlich aufeinanderfolgenden Messpulsen umfasst, und wobei jeder Messpuls der Sequenz eine zeitliche Pulsbreite von T(Puls) aufweist. Die Pulsabstände bilden eine erste Menge, wobei die erste Menge durch {T(delay)+i^{∗}T(Puls): i ist Element der natürlichen Zahlen zwischen 0 und j} definiert ist, wobei für alle Werte von i gilt: T(delay)+i^{∗}T(Puls) < (2T(delay)+2T(Puls)) , wobei die erste Menge jeweils nur ein Element für alle Werte von i zwischen 0 und j umfasst und wobei T(delay) eine Pulsabstandsbasiseinheit definiert, wobei T(delay) ≥T(Puls) ist.

Bei einem von dem Objekt reflektierten Messpuls handelt es sich um einen Messpuls, der zuvor ausgesendet wurde, sodass sich durch die Reflektion an dem Objekt seine Ausbreitungsrichtung verändert hat. Man kann den reflektierten Messpuls somit als Echo des ausgesendeten Messpulses verstehen. Insbesondere wird mittels des Verfahrens die Laufzeit der Messpulse zu den Objekten, an denen diese reflektiert wurden, ermittelt und aus dieser mithilfe der Lichtgeschwindigkeit die von dem jeweiligen Messpuls zurückgelegte Distanz zu dem Objekt bestimmt.

Eine optische Distanzmessung zeichnet sich dadurch aus, dass unter Ausnutzung von optischen Signalen, hier optischen Messpulsen, Distanzen bestimmt werden. Unter dem Begriff "Distanz" ist eine Entfernung zu verstehen. Unter der vom Messpuls zurückgelegten Distanz ist die Strecke zwischen dem Sendeelement, das den Messpuls ausgesandt hat, und dem Objekt, das diesen reflektiert hat, plus der Strecke zwischen dem Objekt und dem Empfangselement, das den entsprechenden reflektierten Messpuls empfangen hat, zu verstehen. Insbesondere umfasst das Verfahren die Berücksichtigung der genauen Position des Sendeelementes und des Empfangselementes, insbesondere in Relation zueinander. Da es sich bei dem mindestens einen Objekt typischerweise um ein dreidimensionales Objekt handelt, sodass einige Bereiche des Objektes näher und andere Bereiche des Objektes weiter entfernt angeordnet sein können, ist mit dem Begriff "Distanz zu dem Objekt" die Entfernung zu zumindest einer Stelle des Objektes gemeint, und zwar der Stelle, auf die der Messpuls aufgetroffen und an der diese reflektiert wurde. Mit Laufzeit ist die Zeit zu verstehen, die der Messpuls für die zuvor beschriebene Distanz gebraucht hat. Das Verfahren dient bevorzugterweise zur Distanzmessung zur Anwendung in der fahrerlosen Navigation von Fahrzeugen.

Bei einem Messpuls handelt es sich insbesondere um ein elektromagnetisches, insbesondere um ein optisches Signal. Dieses Signal hat vorzugsweise eine Wellenlänge, die nicht aus dem für das menschliche Auge sichtbaren Bereich stammt. Vorzugsweise wird aus Sicherheitsgründen unsichtbares Infrarot verwendet. Da es sich beim Messpuls um ein elektromagnetisches Signal handelt und somit die Geschwindigkeit des Messpulses bekannt ist, kann aus der Laufzeit eines Messpulses mithilfe der Lichtgeschwindigkeit darauf geschlossen werden, welche Strecke der Messpuls zurückgelegt hat.

Mit dem Begriff "Sequenz" ist insbesondere eine zeitliche Abfolge von Messpulsen gemeint. Dabei ist die Sequenz insbesondere durch ein Muster, in anderen Worten Pattern, definiert, dass durch die Anzahl von Messpulsen, deren Pulsbreiten und den zeitlichen Pulsabständen zwischen den Messpulsen bestimmt ist.

Die Sequenz weist zeitliche Pulsabstände zwischen zeitlich aufeinanderfolgende Messpulse auf. Zeitlich aufeinanderfolgende Messpulse sind zeitlich benachbarte Messpulse. In anderen Worten sind dies Messpulse, die hintereinander ausgesandt wurden. Jeder Messpuls weist eine zeitliche Pulsbreite von T(Puls) auf. Insbesondere sind alle Messpulse der Sequenz auch in ihrer Form identisch ausgebildet.

Unter dem Begriff "Pulsabstand" ist insbesondere nicht ein Puls-zu-Puls Abstand, das heißt der Abstand zwischen dem einen Puls gemessen von dessen Mitte bis zur Mitte des anderen Pulses, zu verstehen. Stattdessen definiert der Pulsabstand hier den Abstand zwischen den sich gegenüberliegenden Enden der Pulse. In anderen Worten kann der zeitliche Pulsabstand ermittelt werden, in dem der Puls-zu-Puls Abstand gemessen von den Mitten genommen wird, wobei dann eine Pulsbreite von T(Puls) abgezogen wird. Dies berücksichtigt, dass die Pulsabstände vorliegend nicht von der Mitte, sondern vom Ende der Pulse, bestimmt werden.

Die Pulsabstände bilden eine erste Menge, die durch {T(delay)+i^{∗}T(Puls): i ist Element der natürlichen Zahlen zwischen 0 und j} definiert ist. i ist insbesondere als Laufindex zu verstehen. i nimmt Werte zwischen 0 und j an. Dabei gilt für alle Werte von i: T(delay)+i^{∗}T(Puls) < (2T(delay)+2T(Puls)). Insbesondere ist die Bedingung für alle Werte größer als j nicht erfüllt. j definiert somit den maximalen Pulsabstand, der T(delay) + j^{∗}T(Puls) entspricht.

Entscheidend ist, dass die erste Menge jeweils nur ein Element für alle Werte von i zwischen 0 und j umfasst. Dies bedeutet, dass trotz der geschweiften Schreibweise der ersten Menge Elemente der ersten Menge nur einmalig vorkommen können. Die erste Menge besteht somit abschließend aus jeweils nur einem Element für alle Werte von i zwischen 0 und j.

Insbesondere umfasst das Verfahren das Bestimmen der ersten Menge. Dabei stellt die Bedingung für alle Werte von i, und zwar dass T(delay)+i^{∗}T(Puls) < (2T(delay)+2T(Puls)) ist, eine Abbruchbedingung dar. Diese Bedingung definiert das größte Element der ersten Menge.

T(delay) ist als Pulsabstandsbasiseinheit zu verstehen, da der kleinste Pulsabstand genau T(delay) beträgt. Das Verfahren umfasst bevorzugterweise die Definition von T(delay). T(delay) kann als minimale Pause zwischen zwei Messpulsen, beispielsweise begrenzt durch die technischen Gegebenheiten einer Sendeeinheit zum Aussenden der Messpulse, definiert sein. T(delay) kann aber auch größer als die technisch bedingte minimale Pause zwischen zwei Messpulsen gewählt werden. Dies führt zu längeren Sequenzen, da die Abbruchbedingung später erreicht wird. Es kann somit bewusst T(delay) größer definiert werden als technisch notwendig, um längere Sequenzen mit mehr Messpulsen zu erzeugen.

Das Verfahren umfasst bevorzugterweise die Definition von T(Puls). T(Puls) kann insbesondere als minimale Pulsbreite definiert werden. Die minimale Pulsbreite ist technisch bedingt, da keine Sendeeinheit Pulse mit unendlicher kurzer Dauer erzeugen kann. T(Puls) kann aber auch größer als die technisch bedingte minimale Pulsbreite gewählt werden.

Insbesondere können T(delay) und T(Puls) derart definiert werden, dass T(delay)=T(Puls). In diesem Fall wird durch die oben genannte Abbruchbedingung bei j=2 erreicht. Die erste Menge besteht somit aus den folgenden Elemente: T(delay), T(delay) + T(Puls), T(delay) + 2^{∗}T(Puls). Die erste Menge umfasst somit drei Elemente, sodass die Sequenz insgesamt vier Messpulse umfasst, zwischen denen die Pulsabstände angeordnet sind. Dabei ist die Reihenfolge der Pulsabstände irrelevant.

Insbesondere entspricht T(delay) mindestens zweimal T(Puls), vorzugsweise mindestens fünfmal T(Puls), ferner bevorzugt mindestens zehnmal T(Puls), am meisten bevorzugt mindestens 16-mal T(Puls).

Insbesondere vorteilhaft ist es, wenn durch die Definition von T(delay) die Länge der Sequenz derart stark verlängert wird, dass insgesamt weniger Energie als typischerweise notwendig (das heißt bei einem normalen Scan mit einem Abwarten zwischen den Pulsen der doppelten maximalen Laufzeit) notwendig wäre.

Insbesondere umfasst die erste Mange j+1 Pulsabstände und die Sequenz j+2 Messpulse. Die Anzahl der Messpulse innerhalb der Sequenz ist somit ebenfalls durch die Abbruchbedingung definiert, die j bestimmt.

Insbesondere umfasst das Verfahren das Aussenden eines ersten Messpulses. Im Anschluss wird ein Element aus der ersten Menge, d.h. ein Pulsabstand, gewählt. Es wird dieser gewählte Pulsabstand abgewartet, bis ein weiterer Messpuls ausgesandt wird. Im Anschluss wird ein weiteres, aber anderes Element, aus der ersten Menge gewählt, dessen Zeitdauer erneut abgewartet wird. Im Anschluss wird wieder ein Messpuls ausgesandt. Dies wird fortgeführt, bis jedes Element der ersten Menge einmalig gewählt wurde. Im Anschluss wird ein letzter Messpuls ausgesandt und somit insgesamt die Sequenz ausgesandt.

Insbesondere handelt es sich bei dem Verfahren um ein Time-of-Flight Verfahren, insbesondere um ein Time Correlated Single Photon Counting Verfahren (TCSPC-Verfahren).

Ein Vorteil am erfindungsgemäßen Verfahren liegt darin, dass bei der Auswertung die Laufzeit der Sequenz eindeutig bestimmt werden kann. Ferner kann eine Vergrößerung der Reichweite erreicht werden.

Die maximale Reichweite ist im Stand der Technik durch die doppelte Laufzeit definiert, die ein Messpuls brauchen würde, um von einem maximal entfernten Objekt reflektiert wieder zurück zu einer Vorrichtung zur Durchführung des Verfahrens zu brauchen. Vorliegend werden jedoch trotz des Aussendens einer Vielzahl von Messpulsen in einer kürzeren Zeitspanne als die zuvor genannte doppelte maximale Laufzeit keine Aliasing Effekte auftreten und die Energie auf mehrere Messpulse aufgeteilt. Die ausgesandte Energieleistung und somit auch die Reichweite kann maximiert werden. Ferner kann auch in großer Weite ein kleiner Distanzbereich abgetastet werden. Im Stand der Technik müsste nach dem Aussenden eines Messpulses die doppelte Laufzeit bis zur maximalen Reichweite gewartet werden, bis ein weiterer Messpuls ausgesandt werden könnte um Aliasing-Effekte zu verhindern. Dies ist besonders hinderlich, wenn nur ein kleiner Bereich in großer Entfernung vermessen werden soll, da die Messung des kleinen Bereichs durch die große Entfernung zur Vorrichtung unverhältnismäßig lange dauert. Mit dem vorliegenden Verfahren müsste die Wartezeit zwischen dem Aussenden benachbarter Messpulse nur das Doppelte der Länge des abgetasteten Distanzbereiches entsprechen. Wie weit dieser Distanzbereich vom Sensor entfernt ist, spielt dabei keine Rolle.

Insbesondere wird die Sequenz derart ausgesandt, dass jeder Pulsabstand größer ist als der vorherige Pulsabstand. Dies trifft natürlich nicht auf den ersten Pulsabstand zu, da ein Vergleich mit einem vorherigen Pulsabstand der gleichen Sequenz nicht möglich ist. In anderen Worten nimmt der Pulsabstand der Sequenz mit zunehmender Sequenz zu. Dies bedeutet, dass die Pulsabstände zeitlich derart angeordnet sind, dass zuerst der kleinste Pulsabstand abgewartet wird und sich die Pulsabstände dann kontinuierlich vergrößern bis zum größten Pulsabstand, der T(delay) + j^{∗}T(Puls) entspricht.

Alternativ kann die Sequenz derart ausgesandt werden, dass jeder Pulsabstand kleiner ist als der vorherige Pulsabstand. Dies trifft wieder auf alle Pulsabstände bis auf den ersten Pulsabstand zu, da ein Vergleich mit einem vorherigen Pulsabstand der gleichen Sequenz nicht möglich ist. Der Pulsabstand nimmt somit mit zunehmender Sequenz ab. Die Sequenz wird in anderen Worten derart ausgesandt, dass sich die Pulsabstände nach dem Aussenden jedes Messpulses verkleinern bis der minimale Pulsabstand, T(delay), erreicht ist.

Insbesondere umfasst das Verfahren das Aussenden einer Vielzahl von Sequenzen. Diese Vielzahl von Sequenzen stellt bevorzugterweise eine Folge von Sequenzen dar. Insbesondere sind alle Sequenzen identisch ausgebildet, und zwar bevorzugterweise wie oben beschrieben.

Das Aussenden und Empfangen einer Sequenz definiert vorzugsweise einen Messdurchlauf. Das Verfahren umfasst bevorzugterweise die Integration der durchgeführten Messdurchläufe. Durch die Integration mehrerer Messdurchläufe kann die Qualität der Messung verbessert werden.

Insbesondere können zwischen mehreren ausgesandten Sequenzen zeitliche Sequenzabstände liegen, und zwar zwischen zeitlich aufeinanderfolgenden Sequenzen, das heißt zeitlich benachbarten Sequenzen. Jede Sequenz weist vorzugsweise eine zeitliche Länge von T(Sequenz) auf, wobei die Sequenzabstände eine zweite Menge bilden, wobei die zweite Menge durch {T(delay2)+i^{∗}T(Sequenz): i ist Element der natürlichen Zahlen zwischen 0 und k} definiert ist, wobei für alle Werte von i gilt: T(delay2)+i^{∗}T(Sequenz) < (2T(delay2)+2T(Sequenz)), und wobei die zweite Menge jeweils nur ein Element für alle Werte von i zwischen 0 und k umfasst. Die zweite Menge besteht vorzugsweise abschließend aus jeweils einem Element für alle Werte von i zwischen 0 und k. T(delay2) ist als Sequenzabstandsbasiseinheit zu verstehen. T(delay2) definiert insbesondere den minimalen Abstand zwischen zwei zeitlich aufeinanderfolgenden Sequenzen.

Die Sequenzabstände werden vorteilhafterweise analog zu den Pulsabständen nicht zwischen den Mitten zweier benachbarter Sequenzen bestimmt, sondern zwischen zwei gegenüberliegenden Enden der benachbarten Sequenzen.

Das Verfahren umfasst insbesondere das Auswerten der empfangenen Messpulse, wobei das Auswerten die Anwendung eines Optimalfilters umfasst, und wobei es sich bei dem Optimalfilter um einen angepassten Optimalfilter handelt.

In anderen Worten ist der Optimalfilter an die Sequenz angepasst. Ein solcher Filter wird auch Matching-Filter oder Korrelationsfilter genannt. Insbesondere ist der Optimalfilter derart angepasst, dass der Optimalfilter das zeitlich gespiegelte Muster der Sequenz umfasst.

In anderen Worten ist die Sequenz durch ein Muster definiert, wobei der Optimalfilter, beziehungsweise dessen Impulsantwort, durch das zeitlich gespiegelte Muster definiert ist. Mathematisch gesehen wird die Sequenz durch eine Nutzsignalfunktion beschrieben. Die Aufgabe des Optimalfilters besteht darin, in dem empfangenen Signal die Nutzsignalfunktion, d.h. die Sequenz, zu finden. Das empfangene Signal wird dem Optimalfilter zugeführt, der optimal an die Sequenz angepasst ist. Durch diese Anpassung ist es möglich, dass der Optimalfilter die bekannte Sequenz, also die bekannte Nutzsignalfunktion, innerhalb des empfangenen Signals findet. Daraus kann auf die Laufzeit der Sequenz und somit auf die Position des Objektes, an dem diese reflektiert wurde, rückgeschlossen werden. Insbesondere dient der Optimalfilter zur optimalen Bestimmung der zeitlichen Lage der Sequenz innerhalb des Empfangssignals.

Durch die Anwendung eines oben beschriebenen Optimalfilters wird erreicht, dass als Output, das heißt als Ergebnis am Ausgang des Optimalfilters, als Autokorrelation eine Antwort resultiert, die bis auf die korrekte Position der Sequenz, minimale Nebenmaxima aufweist. In anderen Worten weist der Output des Optimalfilters nur ein Hauptmaximum auf, das vorzugsweise eine (j+2)-fache Stärke, wobei j+2 die Anzahl der Messpulse in der Sequenz darstellt. Alle anderen weiteren Maxima des Outputs sind lediglich einfach, das heißt sie weisen eine einfache Stärke auf. Dadurch kann vermieden werden, dass die zeitliche Position der Sequenz im empfangenen Signal falsch detektiert wird.

Die Reihenfolge der Pulsabstände der ersten Meng innerhalb der Sequenz kann beliebig gewählt werden, denn bei der Auswertung wird keine vollständige Überlagerung der Sequenz mit einem Optimalfilter erreicht, der nicht optimal an die Sequenz angepasst ist. Dies kann zur Unterdrückung von Übersprechen von benachbarten Sensor-Pixeln einer Empfangseinheit verwendet werden.

Werden eine Vielzahl von Sequenzen, d.h. eine Folge von Sequenzen, ausgesandt, kann der Optimalfilter bevorzugterweise analog auf das Muster dieser Folge von Sequenzen abgestimmt sein.

In einem weiteren Aspekt betrifft die Erfindung eine Vorrichtung zur Durchführung des oben beschriebenen Verfahrens. Die Vorrichtung ist somit zur Durchführung eines erfindungsgemäßen Verfahrens ausgebildet.

Erfindungsgemäss umfasst die Vorrichtung eine Sendeeinheit und eine Empfangseinheit. Insbesondere umfasst die Sendeeinheit Sendeelemente und Empfangseinheit Empfangselemente, insbesondere Sensorpixel. Die Sendeelemente und Empfangselemente sind vorzugsweise an einer Sendematrix beziehungsweise einer Empfangsmatrix zusammengefasst. Eine Matrix kann insbesondere als dreidimensionaler, insbesondere plattenförmiger, Körper verstanden werden, auf dessen einen Oberfläche die entsprechenden Elemente angeordnet sind.

Insbesondere handelt es sich bei der Vorrichtung um eine Scanvorrichtung, bevorzugterweise einen LIDAR-Sensor. Vorzugsweise handelt es sich bei den Sendeelementen jeweils um einen Laser, während die Empfangselemente insbesondere jeweils von einer Diode, insbesondere von einer Einzelphotonen Avalanche-Diode, gebildet sind. Ferner bevorzugt umfasst die Vorrichtung mindestens eine Auswerteeinheit, die vorzugsweise dazu ausgebildet ist, als Time-to-Digital Converter zu agieren. Die Auswerteeinheit ist insbesondere dazu ausgebildet, die empfangenen Messpulse auszuwerten, insbesondere durch Anwendung eines Optimalfilters. Die Auswerteeinheit ist ferner dazu ausgebildet, die Laufzeit der Sequenz zu ermitteln. Ferner bevorzugt kann die Vorrichtung eine Steuereinheit umfassen, die dazu ausgebildet ist, die Sendeeinheit und/oder die Empfangseinheit und/oder die Auswerteeinheit zur Durchführung des Verfahrens entsprechend zu steuern. Die Steuereinheit umfasst vorzugsweise eine anwendungsspezifische integrierte Schaltung (ASIC) oder einen Field Programmable Gate Array (FPGA).

Ferner bezieht sich die vorliegende Erfindung auf ein Computerprogrammprodukt, das ein computerlesbares Speichermedium umfasst, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen. Weiterhin betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen.

### Kurze Beschreibung der Zeichnungen

Es zeigen schematisch:
- Figur 1: ein Verfahrensschema eines erfindungsgemäßen Verfahrens;
- Figur 2: eine Sequenz, die mit einem erfindungsgemäßen Verfahren ausgesandt werden kann;
- Figur 3: eine weitere Sequenz, die durch dieselbe erste Menge wie die Sequenz aus Figur 2 definiert ist;
- Figur 4: eine weitere Sequenz, die durch dieselbe erste Menge wie die Sequenzen aus den Figuren 2 und 3 definiert ist;
- Figur 5: eine Vielzahl von Sequenzen, die nach dem erfindungsgemäßen Verfahren ausgesandt werden können; und
- Figur 6: der zeitliche Ablauf eines "Matching" mit einem Optimalfilter gezeigt.

### Bevorzugte Ausführungsformen der Erfindung

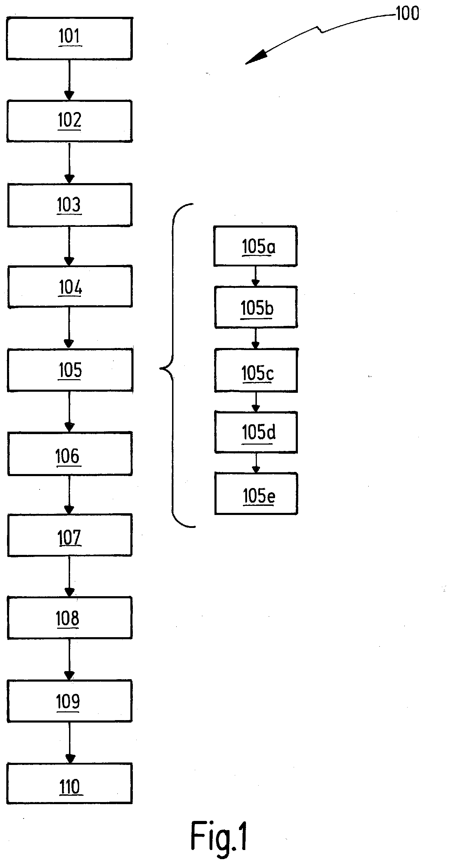

In Figur 1 ist ein Verfahrensdiagramm eines erfindungsgemäßen Verfahrens (100) dargestellt.

Das Verfahren (100) umfasst das Aussenden (101) einer Vielzahl von Messpulsen (22), die Reflektion (102) von ausgesandten Messpulsen an mindestens einem Objekt sowie das Empfangen (103) von reflektierten Messpulsen. Erfindungsgemäß wird eine Sequenz (20) von Messpulsen (22) ausgesandt (105), wobei die Pulsabstände (24) der Sequenz (20) durch eine erste Menge definiert sind.

Vor dem Aussenden (105) der Sequenz (20) wird die erste Menge von Pulsabständen (24) bestimmt (104). Diese umfasst insbesondere die Definition der zeitlichen Pulsbreite (23) der auszusendenden Messpulse, d.h. T(Puls). Ferner bevorzugt wird die Pulsabstandsbasiseinheit T(Delay) definiert.

Die erste Menge ist definiert durch {T(delay)+i^{∗}T(Puls): i ist Element der natürlichen Zahlen zwischen 0 und j} definiert ist, wobei für alle Werte von i gilt: T(delay)+i^{∗}T(Puls) < (2T(delay)+2T(Puls)), und wobei die erste Menge jeweils nur ein Element für alle Werte von i zwischen 0 und j umfasst. Nach Definition von T(Delay) und T(Puls) kann die erste Menge abschließend eindeutig bestimmt werden.

Die Sequenz (20) wird insbesondere derart ausgesandt (105), dass zuerst ein erster Messpuls (22a) ausgesandt wird (105a). Im Anschluss wird ein Pulsabstand (24) aus der ersten Menge von Pulsabständen abgewartet (105b). Es wird somit aus der ersten Menge von Pulsabständen ein Element ausgewählt und die entsprechende Zeitspanne des Pulsabstandes (24) abgewartet. Dies entspricht dem ersten Pulsabstand (24a) der Sequenz (20).

Im Anschluss wird ein weiterer Messpuls ausgesandt (105c), woraufhin erneut eines anderen Pulsabstand aus der ersten Menge abgewartet wird (105d). Hierzu wird ein Element aus der ersten Menge ausgewählt, das zuvor noch nicht ausgewählt wurde, und dessen Zeitspanne abgewartet. Anschließend wird ein weiterer Messpuls ausgesandt (105e), wonach erneut ein weiterer bisher noch nicht ausgewählter Pulsabstand (24) aus der ersten Menge ausgewählt werden kann. Dies geschieht so lange, bis jeweils einmal jedes Element aus der ersten Menge ausgewählt wurde. Im Anschluss erfolgt das Aussenden eines letzten Messpulses.

Vorzugsweise kann eine Vielzahl von Sequenzen (20) ausgesandt werden (106). Dabei können insbesondere Sequenzabstände (26) zwischen dem Aussenden von Sequenzen (20) abgewartet werden, die durch eine oben beschriebene zweite Menge definiert sind. Das Aussenden (106) einer Vielzahl von Sequenzen (20) kann daher zuvor das Bestimmen der zweiten Menge umfassen. Das Aussenden der Sequenzen (20) und das Abwarten der Sequenzabstände (26) bzw. das Auswählen eines Sequenzabstandes (26) aus der zweiten Menge erfolgt insbesondere analog zu dem oben Beschriebenen zur ersten Menge.

Die empfangenen Messpulse werden vorzugsweise ausgewertet (107), wobei die Auswertung bevorzugterweise die Anwendung (108) eines Optimalfilters (31) umfasst. Im Rahmen der Auswertung wird die Laufzeit der Sequenz (20) bestimmt (109) und somit die Distanz zum Objekt, an dem die Sequenz (20) reflektiert wurde, bestimmt (110).

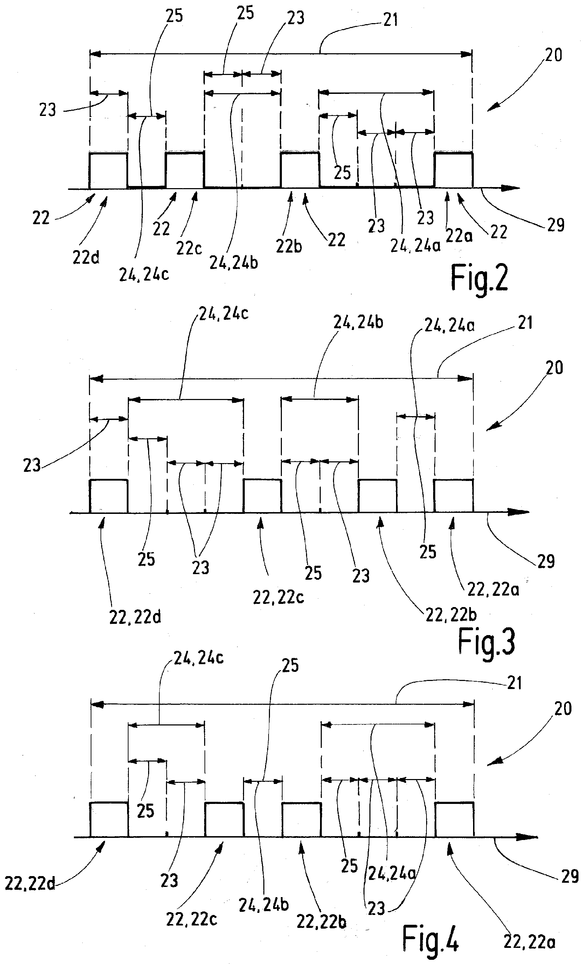

Figur 2 zeigt eine Sequenz (20), die mit einem erfindungsgemäßen Verfahren (100) ausgesandt werden kann.

Die Sequenz (20) hat eine Länge (21). Die Sequenz (20) ist auf einer Zeitskala (29) dargestellt. Die Abbruchbedingung ist hier bei j=2 erreicht. Die erste Menge besteht und zwar abschließend aus den folgenden Elementen: eine Pulsabstandsbasiseinheit, eine Pulsabstandsbasiseinheiten plus einer Pulsbreite, eine Pulsabstandsbasiseinheiten plus zwei Pulsbreiten, wobei jedes vorgenannte Element nur einmalig in der ersten Menge enthalten ist.

Die Sequenz (20) umfasst vier Messpulse (22), und zwar einen ersten Messpuls (22a), einen zweiten Messpuls (22b), einen dritten Messpuls (22c) und einen vierten Messpuls (22d). Alle Messpulse weisen T(Puls) als Pulsbreite (23) auf. In anderen Worten weisen alle Messpulse dieselbe Pulsbreite (23) auf.

Als erstes wird der erste Messpuls (22a) ausgesandt (104a). Im Anschluss wird ein Pulsabstand (24) aus der ersten Menge von Pulsabständen (24), und zwar der erste Pulsabstand (24a), abgewartet, bis ein zweiter Messpuls (22b) ausgesandt wird. Der erste Pulsabstand (24a) beträgt eine Pulsabstandsbasiseinheit (25) T(delay) plus zwei Pulsbreiten (23) T(Puls).

Nach dem Aussenden des zweiten Messpulses (22b) wird erneut ein Pulsabstand (24), und zwar ein zweiter Pulsabstand (24b), aus der ersten Menge abgewartet. Der zweite Pulsabstand (24b) beträgt eine Pulsabstandsbasiseinheiten (25) T(delay) plus eine Pulsbreite (23) T(Puls). Anschließend wird ein dritter Messpuls (22c) ausgesandt, wonach ein weiterer Pulsabstand (24), und zwar der dritte Pulsabstand (24c), der eine Pulsabstandsbasiseinheit (25) beträgt, abgewartet. Zuletzt wird ein letzter Messpuls (22), und zwar der vierte Messpuls (22d), ausgesandt.

Die Länge des Signales (21) beträgt somit vier Pulsbreiten (23) und sechs Pulsabstandsbasiseinheiten (25).

Die Messpulse (22) sind derart ausgesandt, dass ausgehend vom größten Pulsabstand der ersten Menge jeder Pulsabstand kleiner ist als der vorherige. Die Pulsabstände (24) nehmen somit in ihrer Länge mit zunehmender Sequenz ab.

Figur 3 zeigt eine weitere Sequenz (20), die durch dieselbe erste Menge wie die Sequenz aus Figur 2 definiert ist.

Die Pulsabstände (24), und zwar der erste Pulsabstand (24a), der zweite Pulsabstand (24b) und der dritte Pulsabstand (24c), stammen aus der ersten Menge. Dabei folgt allerdings nun, im Gegensatz zur Figur 2, zeitlich als erster Pulsabstand (24a) der kleinste Pulsabstand (24) der ersten Menge, im Anschluss als zweiter Pulsabstand (24b) der zweitkleinste Pulsabstand der ersten Menge, und als letzter, dritte Pulsabstand (24c) der längste Pulsabstand. In anderen Worten, sind die Pulsabstände (24) zeitlich gespiegelt im Vergleich zu der Sequenz (20) der Figur 2 angeordnet. Die Pulsabstände (24) nehmen so mit fortschreitender Sequenz zu, bis der maximale Pulsabstand (24), hier der dritte Pulsabstand (24c), erreicht ist.

In Figur 4 ist eine weitere Sequenz (20), die durch die erste Menge wie die Sequenzen (20) der Figuren 2 und 3 definiert ist, gezeigt.

Im Vergleich zu den Sequenzen (20) der Figuren 2 und 3 erfolgt zeitlich, als erster Pulsabstand (24a), der längste Pulsabstand (24) der ersten Menge, woraufhin im Anschluss, nach dem Aussenden eines zweiten Messpulses (22b) als zweiter Pulsabstand (24b) das kleinste Element der ersten Menge folgt. Als letztes wird ein Pulsabstand (24) als dritter Pulsabstand (24c) abgewartet, der eine Pulsabstandsbasiseinheit (25) und eine Pulsbreite (23) entspricht.

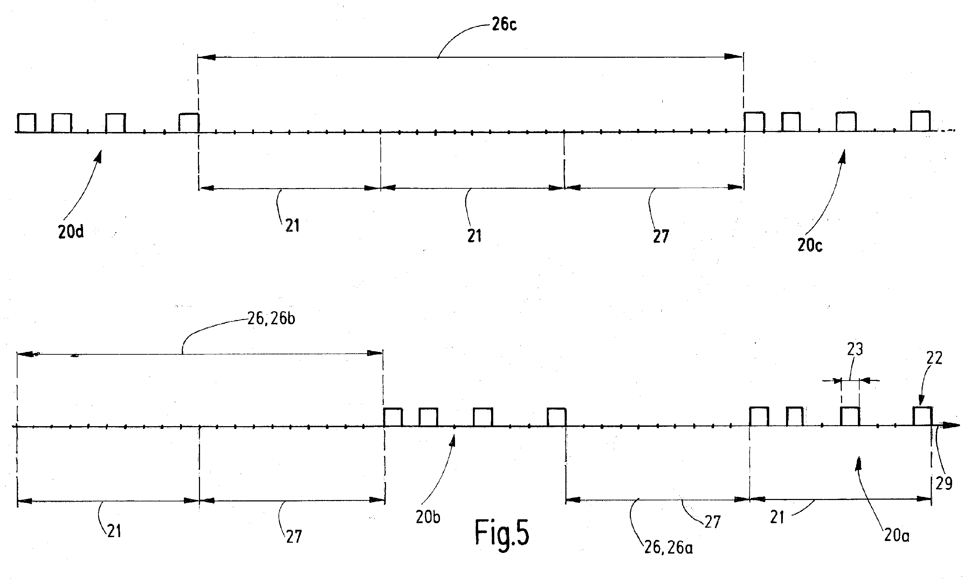

In Figur 5 ist eine Vielzahl von Sequenzen (20) gezeigt, die nach dem erfindungsgemäßen Verfahren (100) ausgesandt werden können. Die Vielzahl von Sequenzen (20) sind auf einer Zeitskala (29) dargestellt, die aus Platzgründen unterbrochen ist.

Dabei werden vier Sequenzen (20) ausgesandt, eine erste Sequenz (20a), eine zweite Sequenz (20b), eine dritte Sequenz (20c) und eine vierte Sequenz (20d), die alle identisch zueinander ausgebildet sind. Jede Sequenz (20) ist ausgebildet wie die in Figur 2 dargestellt.

Zwischen den Sequenzen (20) sind Sequenzabstände (26) angeordnet, und zwar ein erster Sequenzabstand (26a) zwischen der ersten Sequenz (20a) und der zweiten Sequenz (20b), ein zweiter Sequenzabstand (26b) zwischen der zweiten Sequenz (20b) und der dritten Sequenz (20c), sowie ein dritter Sequenzabstand (26c) zwischen der dritten Sequenz (20c) und der vierten Sequenz (20d).

Dabei bilden die Sequenzabstände (26) eine zweite Menge, die durch folgende Elemente gegeben ist: eine Sequenzabstandsbasiseinheit (27), eine Sequenzabstandsbasiseinheit (27) plus eine Sequenzlänge (21), eine Sequenzabstandsbasiseinheit (27) plus zwei Sequenzlängen (21). Hier entspricht die Sequenzlänge (21) vorzugsweise der Sequenzabstandsbasiseinheit (27).

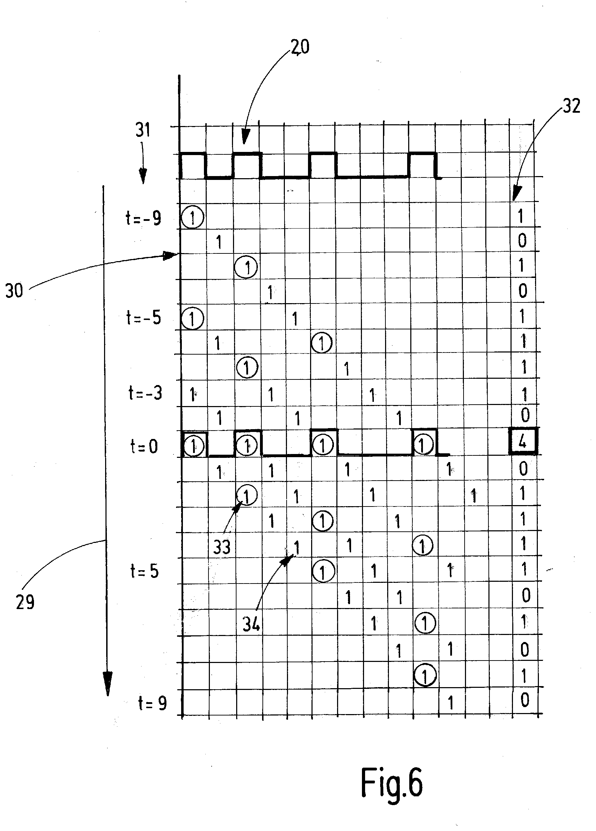

In Figur 6 ist der zeitliche Ablauf eines "Matching" eines empfangenen Signals mit einem Optimalfilter (30) gezeigt.

Die Sequenz (20), die ausgesandt wurde und in dem empfangenen Signal enthalten ist, ist analog zur Sequenz der Figur 2 ausgebildet.

Entlang einer Zeitskala (29) ist dargestellt, wie ein Optimalfilter (30), in anderen Worten ein Matching-Filter, über das empfangene Signal läuft. Neben der Zeitskala (29) ist der Zeitoffset (31) des Optimalfilters (30) gezeigt. Der Optimalfilter (30) ist derart ausgebildet, dass er ein Muster aufweist, das zum Muster der Sequenz (20) zeitgespiegelt ist. Dies ist daran zu erkennen, dass die in der Figur 6 dargestellten Einsen in Zeitverlaufsrichtung zuerst einen Abstand zueinander aufweisen, der dem dritten Pulsabstand der Sequenz entspricht, dann einen Abstand, der dem zweiten Pulsabstand entspricht, und dann einem Abstand, der dem ersten Pulsabstand entspricht. Zwischen den Einsen sind nicht dargestellte Nullen angeordnet. Der Optimalfilter (30) mit zeitgespiegeltem Muster wird sukzessiv, das heißt absteigend nach unten entlang der Zeitskala (29), über das empfangene Signal umfassend die Sequenz (20) korreliert.

Sobald der Optimalfilter (30) auf einen Messpuls (22) trifft, wird ein Match (33) registriert. Ansonsten ist kein Match (34) das Resultat. Matches (33) sind in der Figur 6 derart dargestellt, dass die entsprechende Eins umkreist ist.

In der rechten Spalte ist der Output (32) des Optimalfilters (30) dargestellt. Der Output (32) zu einer bestimmten Zeit ist eine Summe der Matches (33) in der entsprechenden Zeile. Beispielsweise ist in der ersten Zeile (bei T=-9) nur ein Match (33) festgestellt worden. Gleiches gilt für die dritte Zeile und die fünfte Zeile. Nur zur Zeit T=0 hat der Output (32) ein Ergebnis von 4, das heißt vier Matches (33) wurden zur gleichen Zeit erkannt. Bis auf dieses Hauptmaximum von 4 beim Zeitpunkt T=0 weist der Output kein weiteres Maximum aufweist, sondern lediglich von dem Hauptmaximum leicht zu unterscheidende Nebenmaxima, die nur 1 betragen.

Mit Hilfe des Optimalfilters (30) kann somit eindeutig festgestellt werden, dass die Sequenz (20) zur Zeit T=0 empfangen wurde. Dadurch, dass eindeutig der Empfangszeitpunkt und somit die Laufzeit der Sequenz (20) festgestellt werden kann, kann eindeutig auf die Distanz zu einem Objekt, an dem die Sequenz (20) reflektiert wurde, geschlossen werden.

### Bezugszeichenliste

- 100: Verfahren
- 101: Aussenden einer Vielzahl von Messpulsen
- 102: Reflektion von ausgesandten Messpulsen an mindestens einem Objekt
- 103: Empfangen von reflektierten Messpulsen
- 104: Bestimmen einer ersten Menge von Pulsabständen
- 105: Aussenden einer Sequenz von Messpulsen
- 105a: Aussenden eines ersten Messpulses
- 105b: Abwarten eines Pulsabstandes aus der ersten Menge
- 105c: Aussenden eines weiteren Messpulses
- 105d: Abwarten eines anderen Pulsabstandes aus der ersten Menge
- 105e: Aussenden eines weiteren Messpulses
- 106: Aussenden von einer Vielzahl von Sequenzen
- 107: Auswerten der empfangenden Messpulse
- 108: Anwendung eines Optimalfilters
- 109: Bestimmen der Laufzeit der Sequenz
- 110: Bestimmen der Distanz zum Objekt

- 20: Sequenz
- 20a: erste Sequenz
- 20b: zweite Sequenz
- 20c: dritte Sequenz
- 20d: vierte Sequenz
- 21: Länge der Sequenz
- 22: Messpulse
- 22a: erster Messpuls
- 22b: zweiter Messpuls
- 22c: dritter Messpuls
- 22d: vierter Messpuls
- 23: Pulsbreite T(Puls)
- 24: Pulsabstände
- 24a: erster Pulsabstand
- 24b: zweiter Pulsabstand
- 24c: dritter Pulsabstand
- 25: Pulsabstandsbasiseinheit T(delay)
- 26: Sequenzabstand
- 26a: erster Sequenzabstand
- 26b: zweiter Sequenzabstand
- 26c: dritter Sequenzabstand
- 27: Sequenzabstandsbasiseinheit
- 29: Zeitskala

- 30: Optimalfilter
- 31: Zeitoffset des Optimalfilters
- 32: Output des Optimalfilters
- 33: Match
- 34: kein Match

## Patentansprüche

1. Verfahren (100) zur optischen Distanzmessung,
wobei das Verfahren (100) das Aussenden (101) einer Vielzahl von Messpulsen (22), die Reflektion (102) von ausgesandten Messpulsen (22) an mindestens einem Objekt und das Empfangen (103) von reflektierten Messpulsen (22) umfasst,
wobei eine Sequenz (20) von Messpulsen (22) ausgesandt wird,
wobei die Sequenz (20) zeitliche Pulsabstände (24) zwischen zeitlich aufeinanderfolgenden Messpulsen (22) umfasst,
wobei jeder Messpuls (22) der Sequenz (20) eine zeitliche Pulsbreite (23) von T(Puls) aufweist,
wobei
die Pulsabstände (24) eine erste Menge bilden,
**dadurch gekennzeichnet, dass** die erste Menge durch {T(delay)+i^{∗}T(Puls): i ist Element der natürlichen Zahlen zwischen 0 und j} definiert ist,
wobei für alle Werte von i gilt: T(delay)+i^{∗}T(Puls) < (2T(delay)+2T(Puls)), wobei die erste Menge jeweils nur ein Element für alle Werte von i zwischen 0 und j umfasst, wobei T(delay) eine Pulsabstandsbasiseinheit (25) definiert, und wobei
T(delay) ≥T(Puls) ist.

2. Verfahren (100) nach Anspruch 1,
**dadurch gekennzeichnet, dass**
das Verfahren die Definition von T(delay) und/oder T(Puls) umfasst.

3. Verfahren (100) nach einem der vorherigen Ansprüche,
**dadurch gekennzeichnet, dass**
T(delay) mindestens 2^{∗}T(Puls), vorzugsweise mindestens 5^{∗}T(Puls), ferner bevorzugt mindestens 10^{∗}T(Puls), am meisten bevorzugt mindestens 16^{∗}T(Puls), entspricht.

4. Verfahren (100) nach einem der vorherigen Ansprüche,
**dadurch gekennzeichnet, dass**
das Verfahren das Bestimmen (104) der ersten Menge umfasst.

5. Verfahren (100) nach einem der vorherigen Ansprüche,
**dadurch gekennzeichnet, dass**
die Sequenz (20) derart ausgesandt wird, dass jeder Pulsabstand (24) größer ist als der vorherige Pulsabstand (24).

6. Verfahren (100) nach einem der Ansprüche 1 bis 5,
**dadurch gekennzeichnet, dass**
die Sequenz (20) derart ausgesandt wird, dass jeder Pulsabstand (24) kleiner ist als der vorherige Pulsabstand (24).

7. Verfahren (100) nach einem der vorherigen Ansprüche,
**dadurch gekennzeichnet, dass**
das Verfahren (100) das Aussenden (106) einer Vielzahl von Sequenzen (20) umfasst.

8. Verfahren (100) nach Anspruch 7,
**dadurch gekennzeichnet, dass**
zeitliche Sequenzabstände (26) zwischen zeitlich aufeinanderfolgenden Sequenzen (20) angeordnet sind,
wobei jede Sequenz (20) eine zeitliche Länge (21) von T(Sequenz) aufweist,
wobei die Sequenzabstände (26) eine zweite Menge bilden,
wobei die zweite Menge durch {T(delay2)+i^{∗}T(Sequenz): i ist Element der natürlichen Zahlen zwischen 0 und k} definiert ist,
wobei für alle Werte von i gilt: T(delay2)+i^{∗}T(Sequenz) < (2T(delay2)+2T(Sequenz)),
wobei die zweite Menge jeweils nur ein Element für alle Werte von i zwischen 0 und k umfasst, und wobei T(delay2) eine Sequenzabstandsbasiseinheit (27) definiert.

9. Verfahren (100) nach einem der vorherigen Ansprüche,
**dadurch gekennzeichnet, dass**
das Verfahren (100) das Auswerten (107) der empfangenen Messpulse (22) umfasst,
wobei das Auswerten (107) die Anwendung (108) eines Optimalfilters (30) umfasst, und
wobei es sich bei dem Optimalfilter (30) um einen angepassten Optimalfilter handelt.

10. Verfahren nach Anspruch 9,
**dadurch gekennzeichnet, dass**
die Sequenz (20) ein Muster umfasst,
wobei der Optimalfilter (30) derart angepasst ist, dass der Optimalfilter (30) das zeitlich gespiegelte Muster umfasst.

11. Vorrichtung zur optischen Distanzmessung, wobei die Vorrichtung eine Sendeeinheit und eine Empfangseinheit umfasst,
**dadurch gekennzeichnet, dass**
die Vorrichtung dazu ausgebildet ein Verfahren (100) nach einem der Ansprüche 1 bis 10 durchzuführen.

12. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 10, im Zusammenspiel mit einer Vorrichtung gemäß Anspruch 11, durchzuführen.

13. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 10, im Zusammenspiel mit einer Vorrichtung gemäß Anspruch 11, durchzuführen.

## Claims

1. A method (100) for optical distance measurement,
wherein the method (100) comprises the emission (101) of a plurality of measurement pulses (22), the reflection (102) of emitted measurement pulses (22) at at least one object and the receipt (103) of reflected measurement pulses (22),
wherein a sequence (20) of measurement pulses (22) is emitted,
wherein the sequence (20) comprises temporal pulse spacings (24) between temporally successive measurement pulses (22),
wherein each measurement pulse (22) of the sequence (20) has a temporal pulse width (23) of T(Pulse),
wherein
the pulse spacings (24) form a first set,
**characterized in that**
the first set is defined by {T(delay)+i^{∗}T(Pulse): i is an element of the natural numbers between 0 and j},
wherein for all values of i it holds that: T(delay)+i^{∗}T(Pulse)<(2T(delay)+2T(Pulse)),
wherein the first set only comprises one element for all values of i between 0 and j, respectively, wherein T(delay) defines a pulse spacing base unit (25),
and wherein
T(delay)≥T(Pulse).

2. The method (100) according to claim 1,
**characterized in that**
the method comprises the definition of T(delay) and/or T(Pulse).

3. The method (100) according to one of the preceding claims,
**characterized in that**
T(delay) corresponds to at least 2^{∗}T(Pulse), preferably at least 5^{∗}T(Pulse), further preferably at least 10^{∗}T(Pulse), most preferably at least 16^{∗}T(Pulse).

4. The method (100) according to one of the preceding claims,
**characterized in that**
the method comprises determining (104) the first set.

5. The method (100) according to one of the preceding claims,
**characterized in that**
the sequence (20) is emitted in such a manner that each pulse spacing (24) is greater than the previous pulse spacing (24).

6. The method (100) according to one of claims 1 to 5,
**characterized in that**
the sequence (20) is emitted in such a manner that each pulse spacing (24) is smaller than the previous pulse spacing (24).

7. The method (100) according to one of the preceding claims,
**characterized in that**
the method (100) comprises the emission (106) of a plurality of sequences (20).

8. The method (100) according to claim 7,
**characterized in that**
temporal sequence spacings (26) are arranged between temporally successive sequences (20),
wherein each sequence (20) has a temporal length (21) of T(Sequence), wherein the sequence spacings (26) form a second set,
wherein the second set is defined by {T(delay2)+i^{∗}T(Sequence): i is an element of the natural numbers between 0 and k},
wherein for all values of i it holds that: T(delay2)+i^{∗}T(Sequence)<(2T(delay2)+2T(Sequence)),
wherein the second set only comprises one element for all values of i between 0 and k, respectively, and wherein T(delay2) defines a sequence spacing base unit (27).

9. The method (100) according to one of the preceding claims,
**characterized in that**
the method (100) comprises the evaluation (107) of the receiving measurement pulses (22),
wherein the evaluation (107) comprises the application (108) of an optimal filter (30), and
wherein the optimal filter (30) is an adapted optimal filter.

10. The method according to claim 9,
**characterized in that**
the sequence (20) comprises a pattern,
wherein the optimal filter (30) is adapted in such a manner that the optimal filter (30) comprises the temporally mirrored pattern.

11. A device for optical distance measurement,
wherein the device comprises a transmission unit and a reception unit, **characterized in that**
the device is configured to carry out a method (100) according to one of claims 1 to 10.

12. A computer program product which comprises a computer-readable storage
medium on which a program is stored which, after it has been loaded into the memory of the computer, enables a computer to carry out a method (100) according to one of claims 1 to 10, in interaction with a device according to claim 11.

13. A computer-readable storage medium on which a program is stored which,
after it has been loaded into the memory of the computer, enables a computer to carry out a method according to one of claims 1 to 10, in interaction with a device according to claim 11.

## Revendications

1. Procédé (100), destiné à la mesure optique d'une distance,
le procédé (100) comprenant l'émission (101) d'une pluralité d'impulsions de mesure (22), la réflexion (102) d'impulsions de mesure (22) émises sur au moins un objet et la réception (103) d'impulsions de mesure (22) réfléchies,
une séquence (20) d'impulsions de mesure (22) étant émise,
la séquence (20) comprenant des intervalles temporels (24) entre les impulsions, entre des impulsions de mesure (22) consécutives dans le temps,
chaque impulsion de mesure (22) de la séquence (20) présentant une largeur d'impulsion (23) temporelle de T(impulsion),
les intervalles (24) entre les impulsions formant une première quantité,
**caractérisé en ce que**
la première quantité est définie par {T(retard)+i*T(impulsion) : i est élément des nombres naturels entre 0 et j},
pour toutes les valeurs de i étant applicable : T(retard)+i*T(impulsion) < (2T(retard)+2T(impulsion)),
la première quantité ne comprenant respectivement qu'un seul élément pour toutes les valeurs de i comprises en 0 et j, T(retard) définissant une unité de base (25) d'intervalles entre les impulsions, et
T(retard) étant ≥ T(impulsion).

2. Procédé (100) selon la revendication 1,
**caractérisé en ce que**
le procédé comprend la définition de T(retard) et/ou de T(impulsion).

3. Procédé (100) selon l'une quelconque des revendications précédentes,
**caractérisé en ce que**
T(retard) correspond à au moins 2*T(impulsion), de préférence à au moins 5*T(impulsion), de manière plus préférentielle, à au moins 10*T(impulsion), de la manière la plus préférentielle, à au moins 16*T(impulsion).

4. Procédé (100) selon l'une quelconque des revendications précédentes,
**caractérisé en ce que**
le procédé comprend la détermination (104) de la première quantité.

5. Procédé (100) selon l'une quelconque des revendications précédentes,
**caractérisé en ce que**
la séquence (20) est émise de telle sorte que chaque intervalle (24) entre les impulsions soit supérieur à l'intervalle (24) précédent entre les impulsions.

6. Procédé (100) selon l'une quelconque des revendications 1 à 5,
**caractérisé en ce que**
la séquence (20) est émise de telle sorte que chaque intervalle (24) entre les impulsions soit inférieur à l'intervalle (24) précédent entre les impulsions.

7. Procédé (100) selon l'une quelconque des revendications précédentes,
**caractérisé en ce que**
le procédé (100) comprend l'émission (106) d'une pluralité de séquences (20).

8. Procédé (100) selon la revendication 7,
**caractérisé en ce que**
des intervalles temporels (26) entre les séquences sont placés entre des séquences (20) consécutives dans le temps,
chaque séquence (20) présentant une longueur (21) temporelle de T(séquence), les intervalles (26) entre les séquences formant une deuxième quantité,
la deuxième quantité étant définie par {T(retard2)+i*T(séquence) : i est élément des nombres naturels entre 0 et k},
pour toutes les valeurs de i étant applicable : T(retard2)+i*T(séquence) < (2T(retard2)+2T(séquence)), la deuxième quantité ne comprenant respectivement qu'un seul élément pour toutes les valeurs de i comprises en 0 et k, et T(retard2) définissant une unité de base (27) d'intervalles entre les séquences.

9. Procédé (100) selon l'une quelconque des revendications précédentes,
**caractérisé en ce que**
le procédé (100) comprend l'évaluation (107) des impulsions de mesure (22) réceptionnées,
l'évaluation (107) comprenant l'utilisation (108) d'un filtre optimal (30), et
le filtre optimal (30) étant un filtre optimal adapté.

10. Procédé selon la revendication 9,
**caractérisé en ce que**
la séquence (20) comprend un modèle,
le filtre optimal (30) étant adapté de telle sorte que le filtre optimal (30) comprenne le modèle reflété dans le temps.

11. Dispositif, destiné à la mesure optique d'une distance, le dispositif comprenant une unité émettrice et une unité réceptrice,
**caractérisé en ce que**
le dispositif est conçu pour réaliser un procédé (100) selon l'une quelconque des revendications 1 à 10.

12. Produit de programme informatique, qui comprend un support de mémoire lisible par ordinateur, sur lequel est mémorisé un programme permettant à un ordinateur, après avoir été chargé dans la mémoire de l'ordinateur, de réaliser un procédé (100) selon l'une quelconque des revendications 1 à 10, en interaction avec un dispositif selon la revendication 11.

13. Support de mémoire lisible par ordinateur, sur lequel est mémorisé un programme permettant à un ordinateur, après avoir été chargé dans la mémoire de l'ordinateur, de réaliser un procédé selon l'une quelconque des revendications 1 à 10, en interaction avec un dispositif selon la revendication 11.
